(19) Europäisches Patentamt
European Patent Office
Office européen des brevets

(11) **EP 4 682 116 A1**

(12) **EUROPÄISCHE PATENTANMELDUNG**

(43) Veröffentlichungstag:
21.01.2026 Patentblatt 2026/04

(21) Anmeldenummer: 25188733.7

(22) Anmeldetag: **10.07.2025**

(51) Internationale Patentklassifikation (IPC):
*C02F 1/72* (2023.01)    *C02F 1/74* (2023.01)
*C02F 1/78* (2023.01)    *B01F 23/23* (2022.01)
*B01F 35/22* (2022.01)

(52) Gemeinsame Patentklassifikation (CPC):
**C02F 1/78; C02F 1/727; C02F 1/74;**
B01F 23/237611; B01F 23/237612;
B01F 23/237613; B01F 35/2213; C02F 2201/784;
C02F 2209/03

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **17.07.2024 DE 102024120221**

(71) Anmelder:
• **L'AIR LIQUIDE, SOCIETE ANONYME POUR
L'ETUDE ET
L'EXPLOITATION DES PROCEDES GEORGES
CLAUDE
75007 Paris (FR)**

• **Helmholtz-Zentrum Dresden - Rossendorf e.V.
01328 Dresden (DE)**

(72) Erfinder:
• **Meier, Markus
47829 Krefeld (DE)**
• **Reinecke, Sebastian
01328 Dresden (DE)**

(74) Vertreter: **Schwenderling, Jens
KEENWAY Patentanwälte Neumann Heine
Taruttis
PartG mbB
Postfach 103363
40024 Düsseldorf (DE)**

(54) **VERFAHREN UND VORRICHTUNG ZUR WASSERAUFBEREITUNG**

(57) Die Erfindung betrifft ein Verfahren und eine Vorrichtung zur Wasseraufbereitung, wobei ein Strom (6) aufzubereitenden Wassers (4) in einem Strömungsabschnitt (2) bereitgestellt und eine sauerstoffangereicherte Prozessflüssigkeit (22) in den Strom (6) des aufzubereitenden Wassers (4) eingebracht wird.

Fig. 1

EP 4 682 116 A1

**Beschreibung**

[TECHNISCHES GEBIET]

Die Erfindung betrifft ein Verfahren und eine Vorrichtung zur Wasseraufbereitung, wobei ein Strom eines aufzubereitenden Wassers bereitgestellt und eine sauerstoffangereicherte Prozessflüssigkeit in den Strom des aufzubereitenden Wassers mittels einer Düseneinrichtung eingebracht wird.

[HINTERGRUND DER ERFINDUNG]

Die Wasseraufbereitung spielt eine entscheidende Rolle für die Erhaltung der Gesundheit von Mensch und Umwelt, da sauberes Wasser eine lebenswichtige Ressource darstellt. Oberflächengewässer wie Flüsse und Seen, Grundwasser und Meerwasser sind oft mit verschiedenen Verunreinigungen belastet, darunter Krankheitserreger, Schwermetalle, chemische Rückstände und organische Verbindungen. Ohne angemessene Aufbereitung können diese Verunreinigungen das Wasser unsicher machen und potenziell zu Krankheiten und Umweltschäden führen.

Gereinigtes Wasser ist aber nicht nur für Mensch und Umwelt wichtig. Effektive Wasseraufbereitung zur Bereitstellung gereinigten Wassers ist auch in vielen Industriezweigen von entscheidender Bedeutung, wie z.B. in der Halbleiterfertigung. In der Halbleiterindustrie wird gereinigtes Wasser in verschiedenen Prozessen verwendet, um hochreine Chips herzustellen. Dazu gehören die Reinigung und Spülung von Wafern, der Lithographieprozess zur Übertragung von Schaltungen, sowie Ätzprozesse zur Entfernung von Material. Gereinigtes Wasser ist unerlässlich, um Verunreinigungen zu entfernen und die Qualität der hergestellten Chips zu gewährleisten. Neben der Chipfertigung wird es auch in anderen Bereichen benötigt. In der pharmazeutischen Industrie wird es für die Herstellung von Medikamenten und die Reinigung von Anlagen verwendet. In der Lebensmittel- und Getränkeindustrie spielt gereinigtes Wasser eine wichtige Rolle bei der Herstellung von Lebensmitteln, Getränken und Verpackungen sowie bei der Reinigung von Produktionsanlagen.

Die Wasseraufbereitung mittels Ozon (O3) oder Sauerstoff (O2) ist ein äußerst wirksamer Prozess zur Reinigung und Desinfektion von Wasser. Sowohl Ozon als auch Sauerstoff sind starke Oxidationsmittel, die eine Vielzahl von organischen und anorganischen Verunreinigungen abbauen können. Der entscheidende technische Effekt liegt in ihrer Fähigkeit, chemische Bindungen in den Verunreinigungen aufzubrechen und diese in weniger schädliche Substanzen zu zerlegen.

Ozon (O3) reagiert direkt mit organischen und anorganischen Verunreinigungen im Wasser, wodurch diese oxidiert und abgebaut werden. Diese Reaktionen führen zur Zersetzung von organischen Stoffen in kleinere, weniger schädliche Moleküle und zur Zerstörung von Mikroorganismen wie Bakterien und Viren. Darüber hinaus können Hydroxylradikale gebildet werden, die eine zusätzliche Oxidationskraft besitzen und zur weiteren Reinigung beitragen. Sobald Ozon in das Wasser gelangt, reagiert es mit Wasser. Die direkte Reaktion zwischen Ozon und Wasser führt zur Bildung von Hydroxylradikalen (OH-Radikal, OH•). Diese Reaktion wird durch folgende Gleichung beschrieben: $O3+H2O \rightarrow O2+2OH \bullet O3+H2O \rightarrow O2+2OH\bullet$. Diese Hydroxylradikale sind äußerst reaktiv und haben eine starke Oxidationskraft, die es ihnen ermöglicht, organische Verunreinigungen im Wasser effektiv abzubauen.

Aus der US 2019/0300405 A1 ist die Herstellung von hoch angereichertem ozonisiertem Wasser und dessen Einbringung in einen Abwasser-/Prozesswasserstrom bekannt. Dabei wird eine Düse mit zwei oder mehr Einzeldüsen über vorgeschaltete Ventile angesteuert. Wird weniger ozonisiertes Wasser benötigt, so werden sukzessive die Einzeldüsen abgeschaltet, indem die vorgeschalteten Ventile zugedreht werden. Der Stand der Technik beschreibt die Vermischung von unter Druck stehenden ozonisiertem Wasser in einen Abwasserwasserstrom mittels einstellbarer Ventile und zuführenden Düsen. Dabei muss jedoch gewährleistet werden, dass der Druckabfall an den Düsenspitzen stattfindet, und nicht vorher in der Leitung zu den Düsen an den Ventilen. Jede Querschnittsverengung kann zu einem Druckabfall und damit zu einem Ausgasen des übersättigten Ozons aus der Prozessflüssigkeit vor der eigentlichen Düsenaustrittsöffnung führen. Das reduziert den Wirkungsgrad der Wasseraufbereitung erheblich. Die einzelnen Ventile der Leitungen zu den Düsenspitzen werden auf und zugedreht, um je nach Volumenstrom einen konstanten Druck bzw. eine konstante Austrittsgeschwindigkeit zu gewährleisten. Dadurch findet der Druck aber am Ventil statt, was das Ausgasen des Ozons aus der Prozessflüssigkeit begünstigt. Außerdem lässt sich der Druck nicht genau regeln.

Es ist daher Aufgabe der Erfindung, eine Möglichkeit vorzuschlagen, die die Wasseraufbereitung verbessert und ihren Wirkungsgrad erhöht.

[ZUSAMMENFASSUNG DER ERFINDUNG]

Die der Erfindung zugrunde liegende Aufgabe wird durch die Merkmale der unabhängigen Ansprüche gelöst. Bevorzugte Ausführungsformen der Erfindung sind in den Unteransprüchen definiert.

Die Erfindung wird hinsichtlich mehrerer Aspekte beschrieben, die ein Verfahren und eine Vorrichtung betreffen. Die Ausführungen zu den einzelnen Aspekten ergänzen einander, so dass die Ausführungen für die Vorrichtung auch als Ausführungen zum Verfahren zu verstehen sind und andersherum. Sämtliche Ausführungen betreffend das erfindungsgemäße Verfahren gelten folglich gleichermaßen in Bezug auf die Vorrichtung, die demgemäß ausgebildet ist.

Ein erster Aspekt der Erfindung betrifft ein Verfahren zur Wasseraufbereitung. Das Verfahren sieht vor, dass ein Strom aufzubereitenden Wassers in einem Strömungsabschnitt bereitgestellt und eine sauerstoffangereicherte Prozessflüssigkeit in den Strom des aufzubereitenden Wassers eingebracht wird, wobei das Einbringen der sauerstoffangereicherten Prozessflüssigkeit in den Strom des aufzubereitenden Wassers über eine Düseneinrichtung erfolgt, wobei die Düseneinrichtung eine Mehrzahl an Düsenöffnungen aufweist, die zusammen eine Austrittsfläche für die Prozessflüssigkeit aus der Düseneinrichtung definieren, wobei die Düseneinrichtung dazu eingerichtet ist, die Austrittsfläche, durch die die Prozessflüssigkeit austritt, zu variieren, wobei zur Einstellung der Austrittsfläche ein Mechanismus vorgesehen ist, der in Abhängigkeit vom Betriebsdruck der Prozessflüssigkeit in der Düseneinrichtung steuert, ob die Prozessflüssigkeit durch eine oder mehrere der Düsenöffnungen strömen kann oder nicht.

Die Austrittsfläche der Düse ist variabel, d.h. die zum Einbringen der Prozessflüssigkeit zur Verfügung stehende Gesamtaustrittsfläche der Düseneinrichtung kann verändert werden. Hierzu dient als Mittel ein Mechanismus, der in Abhängigkeit des in der Düseneinrichtung anliegenden Drucks (Betriebsdruck) der Prozessflüssigkeit bestimmt, ob die Prozessflüssigkeit durch eine oder mehrere Düsenöffnungen fließen kann oder nicht. Eine aktive Umsetzung des Mechanismus kann z.B. ein aktives Verschließen und Öffnen von Düsenöffnungen umfassen. Eine passive Umsetzung des Mechanismus kann Düsenöffnungen umfassen, die aufgrund eines konstruktiv festgelegten Strömungswiderstands erst ab einem vorbestimmten Betriebsdruck den Durchfluss der Prozessflüssigkeit ermöglichen. In der Düseneinrichtung öffnet sich mit zunehmendem Volumenstrom und steigendem Druck allmählich mehr Austrittsfläche der Düse. Je mehr Druck auf das System Düseneinrichtung ausgeübt wird, desto mehr Öffnungen werden durchströmt, so dass der Druck im Düsenkörper darauf hin abnimmt oder konstant bleibt.

Nach einer besonders bevorzugten Ausführungsform ist vorgesehen, dass der Mechanismus mehreren Düsenöffnungen zugeordnet ist bzw. auf mehrere Düsenöffnungen wirkt, wobei aber der Düsenmechanismus dazu eingerichtet ist, in Abhängigkeit vom Betriebsdruck die Anzahl der Düsenöffnungen, durch die Prozessflüssigkeit fließen kann, zu variieren, d.h., zu bestimmten, ob Prozessflüssigkeit durch die Düsenöffnungen fließen kann oder nicht. Insbesondere kann vorgesehen sein, dass die Düsenöffnungen an eine gemeinsame Zuführleitung angeschlossen sind und der Mechanismus ebenfalls in dieser gemeinsamen Zuführleitung angeordnet. Im Gegensatz zur herkömmlichen Praxis, bei der jeder Düsenöffnung ein eigenes Ventil zugeordnet ist, teilen sich die Düsen bei diesem Ansatz zumindest teilweise eine Steuerung, wodurch separate Ventile überflüssig werden.

Die Düsenöffnungen haben jeweils eine eigene Austrittsfläche, die durch die Querschnittsfläche der jeweiligen Düsenöffnung definiert ist. Die Düsenöffnungen bzw. deren Austrittsflächen zusammengenommen definieren die Austrittsfläche der Düseneinrichtung. Anders ausgedrückt, die Summe der Querschnittsflächen der einzelnen Düsenöffnungen ergibt die Gesamtaustrittsfläche der Düseneinrichtung.

Für den Mechanismus gilt, dass er in Abhängigkeit vom Betriebsdruck den Durchlass der Prozessflüssigkeit durch eine oder mehrere der Düsenöffnungen verhindert oder erlaubt, was anders ausgedrückt bedeutet, dass der Durchlass durch den vorherrschenden Betriebsdruck der Prozessflüssigkeit verhindert oder erlaubt wird. Mit anderen Worten, der Betriebsdruck steuert den Mechanismus, insbesondere mittels direkter mechanischer Reaktion. Somit ist die Düseneinrichtung auch so konfiguriert, dass die Austrittsfläche, durch die die Prozessflüssigkeit aus der Düseneinrichtung in den Strom des aufzubereitenden Wassers austritt, veränderbar ist, wobei der Mechanismus in Abhängigkeit vom Betriebsdruck den Durchlass der Prozessflüssigkeit durch eine oder mehrere der Düsenöffnungen verhindert oder erlaubt, um die Austrittsfläche zu vergrößern oder zu verkleinern.

Die erfindungsgemäße Ausgestaltung des Mechanismus erlaubt es, das Eindüsen der Prozessflüssigkeit in den Strom des aufzubereitenden Wassers effektiv zu regulieren. So wird insbesondere eine unerwünschte Ausgasung der Sauerstoffanreicherung aus der Prozessflüssigkeit vor der Düsenöffnung effektiv verhindert und die Effizienz der Wasseraufbereitung erhöht.

Der Begriff "aufzubereitendes Wasser" bezieht sich auf Wasser, das Verunreinigungen, Schadstoffe oder andere unerwünschte Stoffe enthält und einem Aufbereitungs- oder Reinigungsprozess unterzogen werden muss, um es für einen bestimmten Verwendungszweck geeignet zu machen. Trinkwasser muss beispielsweise von potenziell gesundheitsschädlichen Verunreinigungen wie Bakterien, Viren, Schwermetallen und Chemikalien befreit werden, um sicher für den menschlichen Verzehr zu sein. Abwasser muss gereinigt werden, um Schadstoffe zu entfernen und die Umweltbelastung zu minimieren, bevor es in Flüsse oder Seen zurückgeführt wird. Industriewasser erfordert möglicherweise die Entfernung spezifischer Chemikalien oder Schwermetalle, um den Anforderungen der jeweiligen Produktionsprozesse zu entsprechen. Schwimmbadwasser muss desinfiziert und von organischen Stoffen befreit werden, um ein gesundes Badeerlebnis zu gewährleisten.

Der Begriff "Prozessflüssigkeit" bezieht sich auf die Flüssigkeit, die in das aufzubereitende Wasser eingespeist wird, um mit diesem zu reagieren und einen Reinigungsprozess zu bewirken. Für die Sauerstoffanreicherung der Prozessflüssigkeit kommen insbesondere Sauerstoff ($O_2$) und Ozon ($O_3$) in Betracht. Nach einer weiteren Ausführungsform der Erfindung ist daher vorgesehen, dass die Prozessflüssigkeit Ozon($O_3$)- oder Sauerstoff($O_2$)-angereichert ist. Eine Flüssigkeit, in der entweder Sauerstoff ($O_2$) oder Ozon ($O_3$) gelöst wurde,

kann als "sauerstoffangereicherte Flüssigkeit" bezeichnet werden. Dieser Begriff beschreibt allgemein eine Flüssigkeit, die eine erhöhte Konzentration von Sauerstoff oder Ozon enthält. Als Grundstoff für die Prozessflüssigkeit kann insbesondere Wasser dienen, insbesondere auch das aufzubereitende Wasser. Das Einbringen von Ozon oder Sauerstoff in eine Prozessflüssigkeit kann durch verschiedene Verfahren erfolgen. Beispielsweis kann in einem Blasenreaktor Ozon oder Sauerstoff in Form von feinen Blasen durch eine Düse oder einen Diffusor in die Prozessflüssigkeit (z.B. Wasser) eingeleitet werden. Diese feinen Blasen haben eine große Oberfläche, wodurch eine effiziente Übertragung von Ozon oder Sauerstoff auf das Wasser ermöglicht wird. Bei der In-line Injektion wird Ozon oder Sauerstoff direkt in die Wasserleitung injiziert, normalerweise an einem Punkt mit hoher Turbulenz, um eine gute Durchmischung zu gewährleisten. Die Venturi-Injektion nutzt den Venturi-Effekt, um Ozon oder Sauerstoff in das Wasser zu injizieren. Dabei wird das Wasser durch eine verengte Düse gepresst, wodurch ein Unterdruck entsteht, der Ozon oder Sauerstoff in das Wasser zieht und dispergiert. Die Diffusionsmethode beinhaltet das Pumpen von Ozon oder Sauerstoff durch eine poröse Membran oder eine Diffusorplatte in das Wasser. Das Ozon oder Sauerstoff diffundiert dann durch die Membran hindurch in das Wasser.

Nach einer weiteren Ausführungsform der Erfindung ist vorgesehen, dass der Betriebsdruck und/oder der Volumenstrom, unter dem die sauerstoffangereicherte Prozessflüssigkeit aus der Düseneinrichtung in den Strom des aufzubereitenden Wassers eingebracht wird, so gewählt sind, dass stromabwärts der Düseneinrichtung kollabierende Kavitationsblasen im Strom des aufzubereitenden Wassers erzeugt werden.

Kavitation begünstigt in mit Ozon oder Sauerstoff angereicherter Flüssigkeit (z.B. Wasser) die Bildung von Hydroxylradikalen. Durch kavitationsinduzierte Druckstöße und Kollaps von Dampfblasen werden hohe Temperaturen und Drücke erzeugt. Diese Bedingungen können zur Fragmentierung von Ozonmolekülen im ozonangereicherten Wasser oder Sauerstoffmolekülen im sauerstoffangereicherten Wasser führen, was zusätzliche Hydroxylradikale erzeugt. Die entstandenen Radikale verstärken den Oxidationsprozess und tragen zur effektiven Entfernung von Verunreinigungen im Wasser bei. Im Kavitationsprozess entstehen zahlreiche Kavitationsblasen, die extrem schnell zusammenbrechen und Temperaturen von mehreren Tausend oder sogar Zehntausend Kelvin erzeugen sowie extrem hohe Drücke entwickeln. Aufgrund der extremen Hitze und des Drucks, kombiniert mit der Mikrosekunden-Dauer des Prozesses, wird genügend Energie freigesetzt, um Makromoleküle zu zersetzen, chemische Bindungen zu brechen und freie Radikale zu erzeugen. Dies führt zur Zersetzung der molekularen Komponenten von Schadstoffen im ozon- oder sauerstoffangereicherten Wasser. Gleichzeitig bewirkt die hohe Energie das Aufbrechen der O-H-Bindung im Wassermolekül, wodurch Wasser direkt in freie Radikale und OH gespalten wird. Diese freien Radikale können weiterhin HO und H202 erzeugen. Diese stark oxidierenden Radikale sind äußerst vorteilhaft für die chemische Reaktion von Polymeren, andere freie radikale Oxidationsreaktionen und den Abbau organischer Schadstoffe. Insgesamt führt insbesondere die Kombination von Ozonisierung und Kavitation zu einer verbesserten Wasseraufbereitung, da sie eine synergistische Wirkung haben und die Bildung von Hydroxylradikalen verstärken, was zu einer effizienten Oxidation und Entfernung von Verunreinigungen im Wasser führt.

Der Bereich, in dem die Prozessflüssigkeit in den Strom des aufzubereitenden Wassers eingebracht wird, kann als Reaktionskammer, im Falle der Bildung von Kavitationsblasen insbesondere als Kavitationskammer bezeichnet werden. Vor der Reaktionskammer bzw. der Kavitationskammer kann von "aufzubereitendem Wasser" gesprochen werden. Nach der Reaktionskammer bzw. der Kavitationskammer kann von "behandeltem Wasser" oder "gereinigtem Wasser" gesprochen werden.

Vorzugsweise sind der Betriebsdruck und der durch die Düseneinrichtung fließende Volumenstrom so gewählt, dass die Kavitationszahl an den Düsenöffnungen kleiner als 0,3, vorzugsweise kleiner als 0,05 ist. Eine niedrige Kavitationszahl gewährleistet eine effiziente Bildung und Kollaps von Kavitationsblasen, die zur Fragmentierung von Ozonmolekülen und zur Bildung von Hydroxylradikalen führen. Diese Radikale verstärken den Oxidationsprozess und tragen zur effektiven Entfernung von Verunreinigungen im Wasser bei.

Die Kavitation an der Düsenöffnung ergibt sich aus der Gleichung:

$$C_v = (P - P_v)/0{,}5pV^2,$$

wobei:

$C_v$ die Kavitationszahl ist,

P der Fluiddruck stromabwärts von der Düsenöffnung ist, d.h. der Fluiddruck des aufzubereitenden Wasser ist,

$P_v$ der Dampfdruck der Prozessflüssigkeit ist

p die Dichte der Prozessflüssigkeit ist und

V die Geschwindigkeit der Prozessflüssigkeit in der Düsenöffnung ist.

Die folgende Tabelle zeigt Beispiele zur Einstellung einer Kavitationszahl von weniger als 0,3:

| P | 130000 | Pa | Temp |

(fortgesetzt)

| $P_v$ | 872,58 | Pa | 5 °C |
|---|---|---|---|
| $P_v$ | 1228,2 | Pa | 10 °C |
| $P_v$ | 1705,8 | Pa | 15 °C |
| $P_v$ | 2339,3 | Pa | 20 °C |
| P | 997 | kg/m³ | |
| V | 22,5 | m/s | |

Vorzugsweise beträgt der Betriebsdruck der Prozessflüssigkeit, die durch die Düsenöffnungen fließt, 10 bar (1000 kPa) oder mehr, um diese Bedingungen zu erreichen.

Mit der hierin beschriebenen Düseneinrichtung kann zum Zwecke eines effektiven Kavitationseffekts der Druckverlust an den Düsenaustrittsöffnungen, also zum umgebenden Medium hin, effektiv realisiert werden, damit dort die maximal mögliche AustrittsGeschwindigkeit des z.B. ozonisierten Wassers erreicht wird. Die hohe Austrittsgeschwindigkeit bzw. der dort vorherrschende Drucksprung erzeugt Kavitation. Wird weniger sauerstoffangereicherte Prozessflüssigkeit gepumpt, so werden aufgrund des hierin beschriebenen Mechanismus automatisch weniger Austrittsöffnungen an der Düseneinrichtung freigegeben, bzw. die Querschnittsfläche, die für das Eindüsen der Prozessflüssigkeit zur Verfügung steht, ist geringer, sodass immer eine maximale Austrittsgeschwindigkeit für die Kavitation ermöglicht wird.

Nach einer weiteren Ausführungsform der Erfindung ist vorgesehen, dass die Zuführung der Prozessflüssigkeit über eine Pumpe erfolgt. Alternativ oder zusätzlich kann ein Druckmittel, wie ein Gas, unter Hochdruck in die Düse eingebracht werden, um die sauerstoffangereicherte Prozessflüssigkeit aus der Düse zu pressen. Die hierin beschriebene Vorrichtung kann zu diesem Zwecke insbesondere einen Speicher oder ein Behältnis für das Druckmittel umfassen, der über eine Zuführleitung mit der Düseneinrichtung verbunden ist.

Nach einer weiteren Ausführungsform der Erfindung ist vorgesehen, dass ein Teil des Stroms des aufzubereitenden Wassers, z.B. in dem ersten Strömungsabschnitt einer erfindungsgemäßen Vorrichtung, in einen Nebenstrom, z.B. einem zweiten Strömungsabschnitt einer erfindungsgemäßen Vorrichtung, umgeleitet wird, wobei in dem Nebenstrom das aufzubereitende Wasser sauerstoffangereichert wird und über die Düseneinrichtung wieder in den Strom eingeleitet wird. Durch den Nebenstrom kann der Ausstoß von Prozessflüssigkeit aus den Düsenöffnungen auch bei stark schwankendem Druck des Hauptstroms effektiv reguliert werden.

Nach einer weiteren Ausführungsform der Erfindung ist vorgesehen, dass eine oder mehrere der Düsenöffnungen so ausgestaltet sind, z.B. hinsichtlich Größe und Durchmesser der Düsenöffnung, dass sie einen vorbestimmten Strömungswiderstand aufweisen, wobei der Strömungswiderstand so gewählt ist, dass der Strömungswiderstand überwunden wird, wenn der Betriebsdruck der Prozessflüssigkeit in der Düseneinrichtung hinter den Düsenöffnungen einen vorbestimmten Wert erreicht. Auf diese Weise kann in Abhängigkeit vom Betriebsdruck der Prozessflüssigkeit bestimmt werden, ob die Prozessflüssigkeit durch die entsprechenden Düsenöffnungen fließen kann oder nicht. Es ist möglich, unterschiedliche Düsenöffnungen mit unterschiedlichen Strömungswiderständen auszugestalten, um ein breites Spektrum an Fließzuständen aus der Düseneinrichtung abzudecken und, je nach Betriebsdruck, die passende Anzahl an Düsenöffnungen freizugeben.

Der Strömungsabschnitt, in dem das aufzubereitende Wasser zur Reaktionskammer fließt, kann auch als erster Strömungsabschnitt bezeichnet werden. Dieser kann insbesondere durch eine Leitung bzw. eine erste Leitung bereitgestellt sein. Der zweite Strömungsabschnitt, der mit dem Strömungsabschnitt, bzw. dem ersten Strömungsabschnitt verbunden ist und durch den aufzubereitendes Wasser zwecks Sauerstoffanreicherung entnommen wird, kann insbesondere eine zweite Leitung sein, die mit der ersten Leitung strömungsverbunden ist.

Nach einer weiteren Ausführungsform der Erfindung ist vorgesehen, dass die Düseneinrichtung ein mechanisches Schließelement aufweist, das in Abhängigkeit vom Betriebsdruck der Prozessflüssigkeit seine Stellung in der Düseneinrichtung verändern kann, um ein oder mehrere Düsenöffnungen zu schließen und/oder freizugeben. Ein solches mechanisches Schließelement stellt eine zuverlässige Lösung dar, um die gewünschte Anzahl an Düsenöffnungen in Abhängigkeit vom Betriebsdruck der Prozessflüssigkeit zu öffnen oder zu schließen.

Nach einer weiteren Ausführungsform der Erfindung ist vorgesehen, dass die Düseneinrichtung ein mechanisches Schaltelement in Form eines Stößels umfasst, der in Richtung der Düsenöffnungen vorgespannt ist und der eine Schließfläche aufweist, die dazu geeignet ist, ein oder mehrere der Düsenöffnungen zu verschließen, insbesondere in Kontakt mit einer oder mehreren Düsenöffnungen zu treten, um diese zu verschließen.

Nach einer weiteren Ausführungsform der Erfindung ist vorgesehen, dass die Düsenöffnungen bzw. die Achse der Düsenöffnungen oder die Austrittsrichtung der Prozessflüssigkeit aus der Düse eine Achse definieren, wobei die Achsen der Düsenöffnungen zumindest teilweise in unterschiedliche Richtungen ausgerichtet sind, vorzugsweise um ein in Strömungsrichtung des aufzubereitenden Wassers fächerförmiges Ausstoßen der Prozessflüssigkeit zu bewirken. Dadurch wird die Verteilung der Prozessflüssigkeit in dem aufzubereitenden Wasser verstärkt. Vorzugsweise sind die Düsenöffnungen in Strömungsrichtung des Stroms spiralförmig um einen Bezugspunkt auf der Düseneinrichtung positioniert. Die Düsenöffnungen können auch so ausgerichtet sein, dass sie das aufzubereitende Wasser in eine Drallbewegung entlang der Strömungsrichtung versetzen.

Nach einer weiteren Ausführungsform der Erfindung ist vorgesehen, dass die Düseneinrichtung zumindest teilweise innerhalb des Stroms des aufzubereitenden Wassers angeordnet ist, vorzugsweise in einem zentralen Abschnitt, also in der Mitte, des ersten Strömungsabschnitts.

Nach einer weiteren Ausführungsform der Erfindung ist vorgesehen, dass die Düsenrichtung einen den Strom des aufzubereitenden Wassers zumindest teilweise umgebenden Abschnitt, durch den das aufzubereitende Wasser fließt, umfasst, wobei die Düsenöffnungen zumindest teilweise um den Strom herum an dem Abschnitt verteilt sind. Alternativ oder zusätzlich können die Düsenöffnungen in Strömungsrichtung verteilt sein. Insbesondere kann der Abschnitt Teil des ersten Strömungsabschnitts der erfindungsgemäßen Vorrichtung sein, der zur Durchführung des aufzubereitenden Wassers dient. Die Austrittsflächen der einzelnen Düsenöffnungen können so ausgerichtet sein, dass die Prozessflüssigkeit in Richtung nach innen, aber unter einem schrägen Winkel, also geneigt in die Richtung, in die das aufzubereitende Wasser fließt, in das aufzubereitende Wasser eingebracht wird.

Vorzugsweise umfasst die Düseneinrichtung ein Leitungsstück, insbesondere ein Rohrstück durch das das aufzubereitende Wasser fließt. Die Düsenöffnungen können in einer Umfangsrichtung um den Strom des aufzubereitenden Wassers herum an einer Innenwand des Leitungsstücks verteilt sein. Alternativ oder zusätzlich können die Düsenöffnungen in Strömungsrichtung verteilt sein.

Ein weiterer Aspekt der Erfindung betrifft die bereits genannte Vorrichtung oder Anordnung zur Aufbereitung von Wasser, insbesondere zur Durchführung des hierin beschriebenen Verfahrens. Aus diesem Grund gelten alle Ausführungen zu insbesondere gegenständlichen und funktionalen Merkmalen des erfindungsgemäßen Verfahrens auch für die erfindungsgemäße Vorrichtung.

Die erfindungsgemäße Vorrichtung umfasst einen Strömungsabschnitt zur Durchführung eines Stroms von aufzubereitendem Wasser, eine Düseneinrichtung zum Einbringen einer Prozessflüssigkeit in den durch den Strömungsabschnitt fließenden Strom von aufzubereitendem Wasser, wobei die Düseneinrichtung eine Mehrzahl an Düsenöffnungen aufweist, die zusammen eine Austrittsfläche für die Prozessflüssigkeit aus der Düseneinrichtung definieren, wobei die Düseneinrichtung dazu eingerichtet ist, die Austrittsfläche, durch die die Prozessflüssigkeit austritt, zu variieren, bzw. zu vergrößern und zu verkleinern, wobei zur Einstellung der Austrittsfläche ein Mechanismus vorgesehen ist, der in Abhängigkeit vom Betriebsdruck der Prozessflüssigkeit in der Düseneinrichtung steuert, ob die Prozessflüssigkeit durch eine oder mehrere der Düsenöffnungen strömen kann oder nicht.

Die erfindungsgemäße Vorrichtung bzw. Einrichtung kann insbesondere Teil einer Wasseraufbereitungsanlage, die vom Erfindungsgedanken umfasst ist.

Nach einer besonders bevorzugten Ausführungsform der Erfindung ist vorgesehen, dass die Düseneinrichtung dazu geeignet ist, durch Einbringen der Prozessflüssigkeit in den Strom des aufzubereitenden Wassers stromabwärts der Düsenöffnungen kollabierende Kavitationsblasen im Strom des aufzubereitenden Wassers zu erzeugen. Zu diesem Zwecke können insbesondere Druckerhöhungs- oder Druckerzeugungsmittel, wie zusätzlich eingeführtes Gas und/oder eine Pumpe, vorgesehen sein, um den Druck und den Volumenstrom der Prozessflüssigkeit in der Düseneinrichtung zu erhöhen, um die für die Kavitation notwendige Austrittsgeschwindigkeit sicherzustellen.

Nach einer weiteren besonders bevorzugten Ausführungsform der Erfindung ist vorgesehen, dass die Vorrichtung einen zweiten Strömungsabschnitt, z.B. eine zweite Leitung, umfasst, der mit dem (ersten) Strömungsabschnitt (z.B. eine erste Leitung), durch den das aufzubereitende Wasser fließt, strömungsverbunden ist, um einen Teil des durch den ersten Strömungsabschnitt fließenden Wassers umzulenken und durch den zweiten Strömungsabschnitt zu führen, wobei in dem zweiten Strömungsabschnitt eine Einrichtung zum Anreichern des durch den zweiten Strömungsabschnitt fließenden Wassers mit einem Sauerstoffanteil aufweist, insbesondere mit O3 oder O2, um die Prozessflüssigkeit bereitzustellen. Der zweite Strömungsabschnitt ist mit der Düseneinrichtung strömungsverbunden, um die sauerstoffangereicherte Prozessflüssigkeit wieder in den ersten Strömungsabschnitt in die Prozesskammer bzw. Kavitationskammer einzuspeisen.

[FIGUREN BESCH REIBUNG]

Die vorliegende Erfindung wird im Folgenden anhand lediglich bevorzugter Ausführungsbeispiele und den Zeichnungen näher erläutert. Es zeigen:

FIG. 1   schematisch eine Vorrichtung zur Wasseraufbereitung nach einer ersten Ausführungsform der Erfindung in einer Schnittansicht;

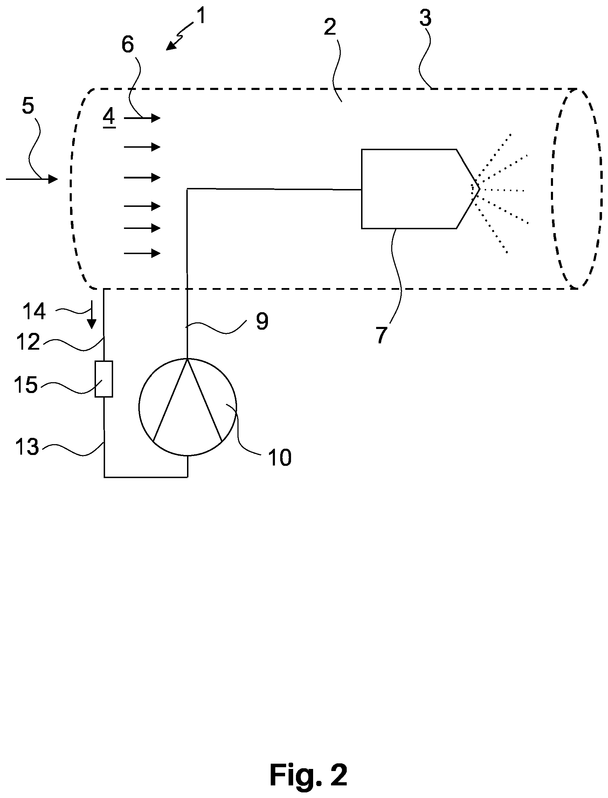

FIG. 2   schematisch eine Vorrichtung zur Wasseraufbereitung nach einer weiteren Ausführungsform der Erfindung in einer Schnittansicht;

FIG. 3   schematisch eine Vorrichtung zur Wasseraufbereitung nach einer weiteren Ausführungsform der Erfindung in einer Schnittansicht; und

FIG. 4   schematisch eine Vorrichtung zur Wasseraufbereitung nach einer weiteren Ausführungsform der Erfindung in einer Schnittansicht.

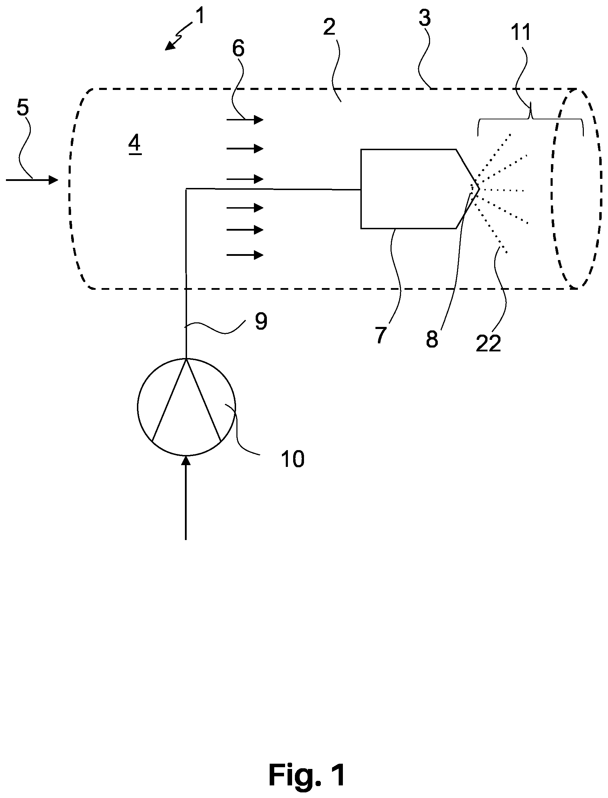

FIG. 1 zeigt schematisch in einer Schnittansicht eine Vorrichtung zur Aufbereitung von Wasser 1, die einen Strömungsabschnitt 2 umfasst, der durch den Abschnitt einer Leitung 3 zur Durchführung von aufzubereitendem Wasser 4, z.B. Abwasser, bereitgestellt wird. Das aufzubereitende Wasser 4 strömt durch die Leitung 3 in der angezeigten Strömungsrichtung 5 in einem Strom 6.

In dem Strömungsabschnitt 2 ist eine Düseneinrichtung 7 angeordnet. Die Düseneinrichtung 7 umfasst an ihrem in Strömungsrichtung 5 gelegenen Ende eine Mehrzahl an Düsenöffnungen 8, aus denen eine Prozessflüssigkeit 22 (angedeutet durch Strahlen) ausgedüst werden kann Die Düsenöffnungen 8 sind, wie die Strahlen andeuten, in unterschiedliche Richtungen ausgerichtet.

Die Düseneinrichtung 7 wird über eine Zuführleitung 9 und eine Pumpe 10 mit der Prozessflüssigkeit 22 gespeist. Die Quelle der Prozessflüssigkeit ist nicht dargestellt. Als Prozessflüssigkeit 22 dient sauerstoffangereichertes, hier Ozon (O3)-angereichertes Wasser. Die Prozessflüssigkeit 22 wird in die Düseneinrichtung 7 unter einem bestimmten Betriebsdruck hier 6 bar (600kPa) eingespeist und über die Düsenöffnungen 8 in den Strom 6 des aufzubereitenden Wassern 4 eingebracht. Dort reagiert die Prozessflüssigkeit 22 mit dem Abwasser und bereitet dieses auf. Der Bereich, wo die Prozessflüssigkeit in den Strom 6 eingebracht wird, wird als Kavitationskammer 11 bezeichnet.

Der Betriebsdruck der Prozessflüssigkeit 22 in der Düseneinrichtung 7 an den Düsenöffnungen ist so gewählt, dass die Prozessflüssigkeit 22 mit hoher Geschwindigkeit aus den Düsenöffnungen 8 austritt und es in der Kavitationskammer 11 zur Bildung von kollabierenden Kavitationsblasen kommt. Durch kavitationsinduzierte Druckstöße und Kollaps von Dampfblasen werden hohe Temperaturen und Drücke erzeugt. Diese Bedingungen führen zur Fragmentierung von Ozonmolekülen im ozonangereicherten Wasser, was zusätzliche Hydroxylradikale erzeugt. Die entstandenen Radikale verstärken den Oxidationsprozess und tragen zur effektiven Entfernung von Verunreinigungen im Wasser bei.

Die Düsenöffnungen 8 haben jeweils eine eigene Austrittsfläche, die durch die Querschnittsfläche der jeweiligen Düsenöffnung definiert ist. Die Düsenöffnungen 8 bzw. deren Austrittsflächen zusammengenommen definieren die Austrittsfläche der Düseneinrichtung 7. Die Summe der Querschnittsflächen der einzelnen Düsenöffnungen 8 ergibt die Gesamtaustrittsfläche der Düseneinrichtung 7.

FIG .2 zeigt eine weitere Ausführungsform der Erfindung, basierend auf der Ausführungsform aus FIG .1. Anders als bei der ersten Ausführungsform wird als Quelle für die Prozessflüssigkeit das aufzubereitende Wasser 4 verwendet. Von dem Strömungsabschnitt 2, der hier als erster Strömungsabschnitt 2 bezeichnet wird, geht ein zweiter Strömungsabschnitt 12 ab, der durch eine zweite Leitung 13 bereitgestellt wird, die strömungsverbunden an die (erste) Leitung 3 in Strömungsrichtung 5 vor der Düseneinrichtung 7 gekoppelt ist. So wird Abwasser aus dem Strom 6 in einen Nebenstrom 14 umgeleitet. Der Nebenstrom 14 wird zu einer Einrichtung zur Ozonanreicherung 15 geleitet, die in der zweiten Leitung 13 angeordnet ist. In der Einrichtung zur Ozonanreicherung 15 wird das Abwasser mit Ozon angereichert. Dadurch wird die Prozessflüssigkeit bereitgestellt. Die Prozessflüssigkeit gelangt dann, wie in Bezug auf die FIG.

1 beschrieben, über die Pumpe 10 und die Zuführleitung 9 in die Düseneinrichtung 7, wo die Prozessflüssigkeit in die Kavitationskammer eingedüst wird.

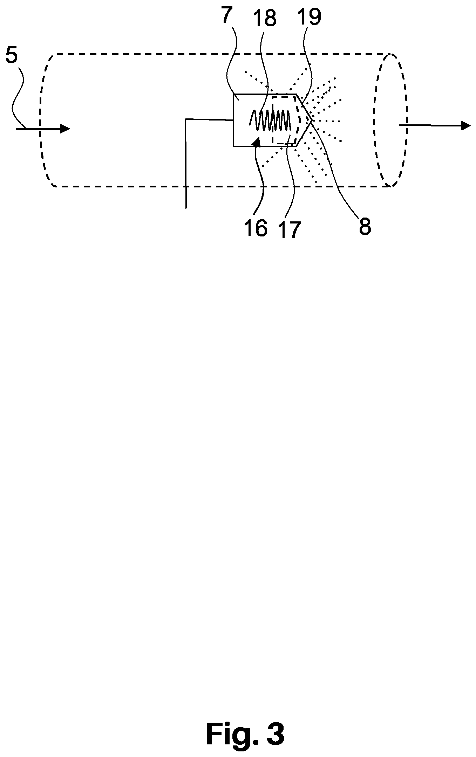

FIG. 3 zeigt schematisch in einer Schnittansicht einen in der Düseneinrichtung 7 vorgesehen Mechanismus 16 zur Einstellung der Austrittsfläche der Düseneinrichtung. Die Düseneinrichtung 7 weist, wie in Bezug auf FIG. 1 erläutert, eine Vielzahl an Düsenöffnungen 8 auf, die in unterschiedliche Richtungen ausgerichtet sind. Der Mechanismus 16 dient dazu, in Abhängigkeit vom vorherrschenden Betriebsdruck der Prozessflüssigkeit in der Düseneinrichtung 7 ein oder mehrere Düsenöffnungen 8 zu schließen oder zu öffnen. Der Mechanismus 16 ist in der Düseneinrichtung 7 in der gemeinsamen Flüssigkeitszuführung für der Düsenöffnungen 8 angeordnet.

Zu diesem Zweck umfasst der Mechanismus 16 ein mechanisches Schaltelement 17 in Form eines Stößels, der über eine Feder 18 gegen eine innere Stirnseite 19 der Düseneinrichtung 7 vorgespannt ist. Je nach Betriebsdruck der Prozessflüssigkeit ändert sich die Position des Stößels hin zu inneren Stirnseite 19 oder von dieser weg. Die Stirnseite des Stößels 17 und seine Umfangsfläche sind so auf die Anordnungen der Düsenöffnungen 8 abgestimmt, dass je nach Position des Stößels 17 dieser eine bestimmte Anzahl an Düsenöffnungen 8 abdeckt und damit verschließt.

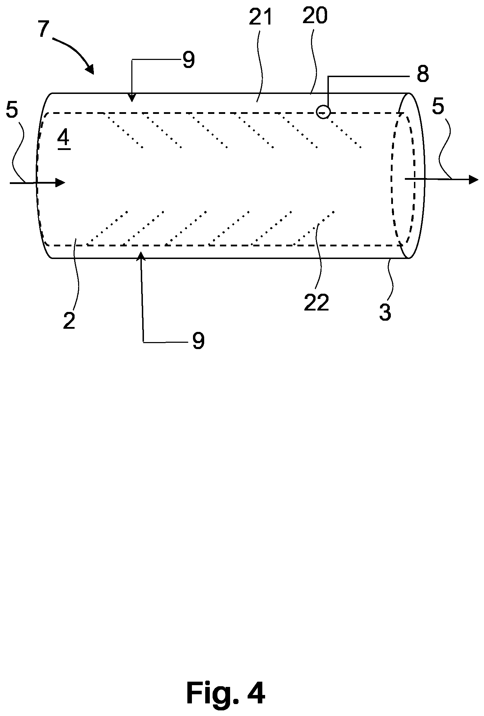

FIG. 4 zeigt eine weitere Ausführungsform der erfindungsgemäßen Vorrichtung mit einer Variante der Düseneinrichtung 7 und des Mechanismus 16. Die Düseneinrichtung 7 ist als ein Rohrstück 20 ausbildet. Das Rohrstück 20 bildet den Strömungsabschnitt 2 aus und ist Teil der Leitung 3, durch den der Strom des aufzubereitenden Wassers 4 in Strömungsrichtung 5 fließt. An der inneren Oberfläche des Rohrstücks 20 sind Düsenöffnungen 8 in Umfangsrichtung des Rohrstücks 20 und in Längsrichtung des Rohrstücks 20 ausgebildet. Wie die in Strömungsrichtung 5 geneigten Strahlen andeuten, sind die Düsenöffnungen 8 schräg ausgerichtet, um die Prozessflüssigkeit 22 sowohl nach innen und als auch in Strömungsrichtung einzudüsen. Das Rohrstück 20 ist als Doppelmantel ausgebildet. Hinter den Düsenöffnungen 8 ist im Rohrstück 20 ein Hohlraum 21 ausgebildet, der über eine Zuführleitung 9 mit der Prozessflüssigkeit 22 gespeist wird. Über die Düsenöffnungen 8 wird die Prozessflüssigkeit 22 aus dem Hohlraum 20 in das aufzubereitende Wasser 4 eingedüst.

Der Durchmesser der Düsenöffnungen 8 ist teilweise unterschiedlich gestaltet, so dass einige Düsen unterschiedliche Strömungswiderstände aufweisen. Der Strömungswiderstand der einzelnen Düsen ist so gewählt, dass der Strömungswiderstand überwunden wird, wenn der Betriebsdruck der Prozessflüssigkeit 22 im Hohlraum 21 hinter den Düsenöffnungen 8 einen vorbestimmten Wert erreicht. So wird in Abhängigkeit vom Betriebsdruck der Prozessflüssigkeit bestimmt, ob die Prozessflüssigkeit durch die betreffende Düsenöffnung fließen kann oder nicht.

**Bezugszeichenliste**

1     Vorrichtung zur Aufbereitung von Wasser
2     (erster) Strömungsabschnitt
3     Leitung
4     aufzubereitendes Wasser
5     Strömungsrichtung
6     Strom
7     Düseneinrichtung
8     Düsenöffnungen
9     Zuführleitung
10    Pumpe
11    Kavitationskammer
12    zweiter Strömungsabschnitt
13    zweite Leitung
14    Nebenstrom
15    Einrichtung zur Ozonanreicherung
16    Mechanismus
17    Mechanisches Schaltelement (Stößel)
18    Feder
19    innere Stirnseite
20    Rohrstück
21    Hohlraum
22    Prozessflüssigkeit

**Patentansprüche**

1.    Verfahren zur Wasseraufbereitung,

> wobei ein Strom (6) aufzubereitenden Wassers (4) in einem Strömungsabschnitt (2) bereitgestellt und eine sauerstoffangereicherte Prozessflüssigkeit (22) in den Strom (6) des aufzubereitenden Wassers (4) eingebracht wird,
> wobei das Einbringen der sauerstoffangereicherten Prozessflüssigkeit (22) in den Strom (6) des aufzubereitenden Wassers (4) über eine Düseneinrichtung (7) erfolgt,
> wobei die Düseneinrichtung (7) eine Mehrzahl an Düsenöffnungen (8) aufweist, die zusammen eine Austrittsfläche für die Prozessflüssigkeit (22) aus der Düseneinrichtung (7) definieren,
> wobei die Düseneinrichtung (7) dazu eingerichtet ist, die Austrittsfläche der Düseneinrichtung (7) zu variieren, wobei zur Einstellung der Austrittsfläche ein Mechanismus (16) vorgesehen ist, der in Abhängigkeit vom Betriebsdruck der Prozessflüssigkeit (22) in der Düseneinrichtung (7) steuert, ob die Prozessflüssigkeit (22) durch eine oder mehrere der Düsenöffnungen (8) strömen kann oder nicht.

2.    Verfahren nach Anspruch 1, wobei der Betriebsdruck und/oder der Volumenstrom, unter dem die sauerstoffangereicherte Prozessflüssigkeit (22) aus der Düseneinrichtung (7) in den Strom (6) des aufzubereitenden Wassers (4) eingebracht wird, so gewählt sind, dass stromabwärts der Düseneinrichtung (7) kollabierende Kavitationsblasen erzeugt werden.

3.    Verfahren nach Anspruch 1 oder 2, wobei ein Teil des Stroms (6) des aufzubereitenden Wassers (6) in einen Nebenstrom (14) in einen zweiten Strömungsabschnitt (12) umgeleitet wird, wobei in dem Nebenstrom (14) das aufzubereitende Wasser (4) sauerstoffangereichert wird und über die Düseneinrichtung (7) wieder in den Strom (6) eingeleitet wird.

4.    Verfahren nach einem der vorhergehenden Ansprüche, wobei eine oder mehrere der Düsenöffnungen (8) so ausgestaltet sind, dass sie einen vorbestimmten Strömungswiderstand aufweisen, wobei der Strömungswiderstand so gewählt ist, dass der Strömungswiderstand überwunden wird, wenn der Betriebsdruck einen vorbestimmten Wert erreicht.

5.    Verfahren nach einem der vorhergehenden Ansprüche, wobei die Düseneinrichtung (7) ein mechanisches Schließelement (17) aufweist, das in Abhängigkeit vom Betriebsdruck seine Stellung in der Düseneinrichtung (7) verändern kann, um eine oder mehrere Düsenöffnungen (8) zu schließen und/oder freizugeben.

6.    Verfahren nach einem der vorhergehenden Ansprüche, wobei die Düsenöffnungen (8) jeweils eine Achse definieren, wobei die Düsenöffnungen (8) in unterschiedliche Richtungen ausgerichtet sind, vorzugsweise um ein in Strömungsrichtung (5) des aufzubereitenden Wassers (4) fächerförmiges Ausstoßen der Prozessflüssigkeit (22) zu bewirken.

7.    Verfahren nach einem der vorhergehenden Ansprüche, wobei die Düsenrichtung (7) im Strömungsabschnitt (2) einen den Strom (6) des aufzubereitenden Wassers (4) zumindest teilweise umgebenden Abschnitt (20) umfasst, wobei die Düsenöffnungen (8) zumindest teilweise um den Strom (6) herum auf dem Abschnitt (20) verteilt sind.

8.    Vorrichtung (1) zur Aufbereitung von Wasser, umfassend einen Strömungsabschnitt (2) zur Durchführung eines Stroms (6) von aufzubereitendem Wasser (4);

eine Düseneinrichtung (7) zum Einbringen einer Prozessflüssigkeit (22) in den durch den Strömungsabschnitt (2) fließenden Strom (6) von aufzubereitendem Wasser (4), wobei die Düseneinrichtung (7) eine Mehrzahl an Düsenöffnungen (8) aufweist, die zusammen eine Austrittsfläche für die Prozessflüssigkeit (22) aus der Düseneinrichtung (7) definieren,

wobei die Düseneinrichtung (7) dazu eingerichtet ist, die Austrittsfläche, der Düseneinrichtung (7) zu variieren, wobei zur Einstellung der Austrittsfläche ein Mechanismus (16) vorgesehen ist, der in Abhängigkeit vom Betriebsdruck der Prozessflüssigkeit (22) in der Düseneinrichtung (7) steuert, ob die Prozessflüssigkeit (22) durch eine oder mehrere der Düsenöffnungen (8) strömen kann oder nicht.

9. Vorrichtung nach Anspruch 8, wobei die Vorrichtung einen zweiten Strömungsabschnitt (12) umfasst, zum Umlenken eines Teils des durch den ersten Strömungsabschnitt (2) fließenden aufzubereitenden Wassers (4), wobei in dem zweiten Strömungsabschnitt (12) eine Einrichtung (15) zum Anreichern des durch den zweiten Strömungsabschnitt (12) fließenden Wassers (4) mit einem Sauerstoffanteil, insbesondere mit O3 oder O2, aufweist, um die Prozessflüssigkeit (22) bereitzustellen, wobei der zweite Strömungsabschnitt (12) mit der Düseneinrichtung (7) strömungsverbunden ist.

**Fig. 1**

**Fig. 2**

**Fig. 3**

**Fig. 4**

# EUROPÄISCHER RECHERCHENBERICHT

**Nummer der Anmeldung**

EP 25 18 8733

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2007 021392 A (HITACHI LTD) 1. Februar 2007 (2007-02-01) * Abbildungen 1-6 * * Absatz [0024] - Absatz [0031] * ----- | 1-9 | INV. C02F1/72 C02F1/74 C02F1/78 B01F23/23 B01F35/22 |
| A | Anonymous: "microbubble flotation ( DAF or FAD )", Degremont Water Handbook, 30. November 2021 (2021-11-30), XP093330944, Gefunden im Internet: URL:https://web.archive.org/web/2021113007 1808/https://www.suezwaterhandbook.com/wat er-and-generalities/fundamental-physical-c hemical-engineering-processes-applicable-t o-water-treatment/flotation/microbubble-fl otation-DAF-or-FAD [gefunden am 2025-10-31] * das ganze Dokument * ----- | 1-9 | |
| X | KR 2015 0133502 A (KUMHO IND CO LTD [KR]) 30. November 2015 (2015-11-30) * Abbildungen 5, 6a, 6b * * Absatz [0028] - Absatz [0032] * ----- | 1-9 | **RECHERCHIERTE SACHGEBIETE (IPC)** C02F B01F |

Der vorliegende Recherchenbericht wurde für alle Patentansprüche erstellt

| Recherchenort | Abschlußdatum der Recherche | Prüfer |
|---|---|---|
| Den Haag | 31. Oktober 2025 | Janssens, Christophe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 8733

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2025

| Im Recherchenbericht angeführtes Patentdokument | Datum der Veröffentlichung | Mitglied(er) der Patentfamilie | Datum der Veröffentlichung |
|---|---|---|---|
| JP 2007021392 A | 01-02-2007 | CN 1899978 A<br>JP 4151681 B2<br>JP 2007021392 A | 24-01-2007<br>17-09-2008<br>01-02-2007 |
| KR 20150133502 A | 30-11-2015 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190300405 A1